# EUROPÄISCHE PATENTSCHRIFT

(11) **EP 3 099 020 B1**
(45) Veröffentlichungstag und Bekanntmachung des Hinweises auf die Patenterteilung: **06.06.2018**
(21) Anmeldenummer: 15190882.9
(22) Anmeldetag: 21.10.2015
(51) Int. Cl.: H04L 12/42, H04L 12/433

(54) **VERFAHREN ZUR DATENKOMMUNIKATION ZWISCHEN EINER BEGRENZTEN ANZAHL VON AN EIN GEMEINSAMES KOMMUNIKATIONSNETZWERK ANGESCHLOSSENEN KOMMUNIKATIONSPARTNERN**
METHOD FOR DATA COMMUNICATION BETWEEN A LIMITED NUMBER OF COMMUNICATION PARTNERS CONNECTED TO A COMMON COMMUNICATION NETWORK
PROCEDE DE COMMUNICATION DE DONNEES ENTRE UN NOMBRE LIMITE DE PARTENAIRES DE COMMUNICATION CONNECTES A UN RESEAU DE COMMUNICATION COMMUN

(43) Veröffentlichungstag der Anmeldung: 30.11.2016
(73) Patentinhaber: Piller Group GmbH, 37520 Osterode am Harz (DE)
(72) Erfinder: Rößler, Michael, 37520 Osterode (DE); Fischer, Florian Jawad Ahmed, 37199 Wulften (DE)
(74) Vertreter: REHBERG HÜPPE + PARTNER

(56) Entgegenhaltungen:
- WO-A2-2004/111859
- DE-A1-102013 020 768
- CHRISTOPH FELSER ET AL: "Improved architecture for Profinet IRT devices", PROCEEDINGS OF 2012 IEEE 17TH INTERNATIONAL CONFERENCE ON EMERGING TECHNOLOGIES & FACTORY AUTOMATION (ETFA 2012) : KRAKOW, POLAND, 17 - 21 SEPTEMBER 2012, IEEE, PISCATAWAY, NJ, 17. September 2012 (2012-09-17), Seiten 1-8, XP032350102, DOI: 10.1109/ETFA.2012.6489562 ISBN: 978-1-4673-4735-8

## Beschreibung

### TECHNISCHES GEBIET DER ERFINDUNG

Die Erfindung bezieht sich auf ein Verfahren zur Datenkommunikation zwischen einer begrenzten Anzahl von an ein gemeinsames Kommunikationsnetzwerk angeschlossenen Kommunikationspartnern.

Insbesondere soll die Kommunikation geeignet sein, um beispielsweise in einer Anlage zur unterbrechungsfreien Stromversorgung eine Echtzeiterfassung von Betriebsparametern verschiedener Teile der Anlage sowie die zeitnahe Übermittlung der jeweiligen Messwerte an alle anderen Teile der Anlage zu ermöglichen.

### STAND DER TECHNIK

Ein Verfahren zur synchronisierten Kommunikation innerhalb eines Kommunikationsnetzwerks mit den Merkmalen des Oberbegriffs des unabhängigen Patentanspruchs 1 ist als Profinet IO RT_CLASS_3 bekannt, siehe www.feldbusse.de/Profinet/RT-Kommunikation.shtml. Das Senden der Datenpakete von den einzelnen Kommunikationspartnern erfolgt nach einer beim Anlagen-Engineering festgelegten Reihenfolge. Die Datenübertragung wird auch als IRT-Funktionalität bezeichnet, wobei IRT für Isochronous Real-Time oder Taktsynchronität steht. Dabei handelt es sich um ein Zeitscheibenverfahren, bei dem jedem Kommunikationspartner in jedem Kommunikationszyklus eine bestimmte Zeitscheibe zugeordnet ist, in der nur er sein Datenpaket aussendet und in der entsprechend alle anderen Kommunikationspartner nur das Datenpaket von diesem einen Kommunikationspartner empfangen. Die Datenpakete umfassen jeweils die MAC-Adresse des jeweiligen aussendenden Kommunikationspartners, wobei MAC für die Media-Access-Control-Adresse, d. h. eine standardisierte individuelle Geräteidentifikation des jeweiligen Kommunikationspartners ist. Die erforderliche Synchronisierung der einzelnen Kommunikationspartner wird nach dem Precision Time Protocol (PTP) erreicht.

Das PTP ist ein Netzwerkprotokoll, das die Synchronität der Uhrzeiteinstellungen mehrerer Geräte in einem Kommunikationsnetzwerk bewirkt. Dazu verteilt ein Master des Kommunikationsnetzwerks Synchronisierungsmitteilungen von seiner Uhr an seine Slaves. Die Empfangszeiten der Synchronisierungsmitteilungen bestimmen die Slaves in den Zeiten ihrer Uhren. Zudem senden die Slaves Delay-Mitteilungsanforderungen an den Master, deren Empfang beim Master in der Zeit seiner Uhr als Delay-Mitteilungen an die Slaves zurückgeschickt werden. Aus den Differenzen dieser vier verschiedenen Zeitmarken werden für jeden Slave ein Master-to-Slave Delay und ein Slave-to-Master Delay bestimmt. In diesen Werten ist jeweils die Differenz zwischen den Zeiten der Uhren des Masters und des jeweiligen Slaves und die Datenlaufzeit mit entgegengesetzten Vorzeichen enthalten. Der Mittelwert der beiden Größen liefert somit den gerichteten Offset der Zeit der Uhr des Slaves gegenüber der Zeit der Uhr des Masters. Der Slave nutzt diesen Offset zur Synchronisierung seiner Uhr mit der Uhr des Masters.

Das PTP verlangt den Austausch verschiedener Mitteilungen zwischen dem Master und dem Slave, um die Synchronisierung zu erreichen. Das darauf basierende Protokoll Profinet IO RT_CLASS_3 ist auf die fortwährende Präsenz des festgelegten Masters angewiesen. Die Festlegung eines neuen Masters beim Ausfall des bisherigen Masters erfordert zusätzliche zeitaufwendige Routinen, die die Datenkommunikation zwischen den verbleibenden Kommunikationspartnern unterbrechen.

Das Time-Triggered Protocol Class C, kurz TTP/C, zur Datenkommunikation zwischen an ein gemeinsames Kommunikationsnetzwerk angeschlossenen Kommunikationspartnern arbeitet ebenfalls zeitgesteuert. Dabei werden Uhren, d. h. Zeittaktsignalgeber der einzelnen Kommunikationspartner, ständig durch Mittelwertbildung der Differenzen zwischen realer Ankunft der Datenpakete und erwarteter Ankunft der Datenpakete synchronisiert. Die erwarteten Ankunftszeiten werden a priori in einer Liste, der sogenannten Message Descriptor List, festgelegt. Aufgrund dieser Liste ist es jedem Kommunikationspartner bekannt, wann es ihm erlaub ist, zu senden und wann er empfangen muss.

DE 10 2013 020 768 A1 offenbart ein Verfahren zur Zeitsynchronisation in einem zyklusbasierten Busnetzwerk, insbesondere in einem Kraftfahrzeugbusnetzwerk, bei dem jeder Knoten im Netzwerk ein dem Knoten bekanntes Sendezeitfenster zugewiesen ist und eine bestimmte Gesamtanzahl von Sendezeitfenstern für die angebundenen Knoten existiert, wobei ein Zeitgeber eine Referenzbuszeit an das Busnetzwerk sendet, wobei ein Knoten anhand der gesendeten Referenzbuszeit, der Länge eines Zyklus sowie dem Sendezeitfenster, in dem die Referenzbuszeit ermittelt wurde, eine aktuelle Buszeit ermittelt.

### AUFGABE DER ERFINDUNG

Der Erfindung liegt die Aufgabe zugrunde, ein Verfahren zur Datenkommunikation zwischen einer begrenzten Anzahl von an ein gemeinsames Kommunikationsnetzwerk angeschlossenen Kommunikationspartnern aufzuzeigen, bei dem eine einfache und anhaltende Synchronisierung der einzelnen Kommunikationspartner erfolgt und das auch dadurch robust gegenüber einem Ausfall des Kommunikationspartners ist, der bislang Master für die Synchronisierung war, sowie dessen schnellen Austausch beim Ausfall ermöglicht.

### LÖSUNG

Die Aufgabe der Erfindung wird durch ein Verfahren mit den Merkmalen des unabhängigen Patentanspruchs 1 gelöst. Die abhängigen Patentansprüche definieren bevorzugte Ausführungsformen des erfindungsgemäßen Verfahrens.

### BESCHREIBUNG DER ERFINDUNG

Bei dem erfindungsgemäßen Verfahren zur Datenkommunikation zwischen Kommunikationspartnern, die in einer begrenzten Anzahl an ein gemeinsames Kommunikationsnetzwerk angeschlossen sind, wird ein sich fortlaufend wiederholender Kommunikationszyklus mit einer festen Abfolge von Zeitscheiben, deren Anzahl mindestens so groß ist wie die begrenzte Anzahl der Kommunikationspartner, für alle Kommunikationspartner definiert. Die Definition des Kommunikationszyklus liegt dann in allen Kommunikationspartner vor. Typischerweise sind die in dem Kommunikationszyklus aufeinander abfolgenden Zeitscheiben gleich lang. Insbesondere kann der Kommunikationszyklus insgesamt aus einer Anzahl von unmittelbar aufeinanderfolgenden gleich langen Zeitscheiben bestehen, die gleich der begrenzten Anzahl der Kommunikationspartner ist.

Weiterhin wird bei dem erfindungsgemäßen Verfahren in jedem Kommunikationspartner eine Liste der aktuell über das Kommunikationsnetzwerk kommunizierenden Kommunikationspartner geführt. Zu den aktuell über das Kommunikationsnetzwerk kommunizierenden Kommunikationspartner zählen die Kommunikationspartner, die an das gemeinsame Kommunikationsnetzwerk angeschlossen sind und regelmäßig, wenn auch nicht notwendiger Weise in jedem Kommunikationszyklus, über das Kommunikationsnetzwerk kommunizieren, wodurch sie in den anderen Kommunikationspartnern als aktuelle Kommunikationspartner zu erkennen sind. Die in jedem Kommunikationspartner geführte Liste der aktuellen Kommunikationspartner wird in allen Kommunikationspartnern auf eine selbe Weise geordnet; und die Liste umfasst auch den jeweiligen Kommunikationspartner, in dem die Liste erstellt wird, selbst. Die einzelnen Listen der aktuellen Kommunikationspartner in den einzelnen Kommunikationspartnern sind daher identisch, weil dieselben, nämlich alle aktuellen Kommunikationspartner, darin auf dieselbe Weise, d. h. in derselben Reihenfolge angeordnet sind.

Bei jeder Wiederholung des Kommunikationszyklus sendet jeder Kommunikationspartner auf der Liste sein Datenpaket nach seiner Position auf der Liste über das Kommunikationsnetzwerk aus. Das heißt, der erste Kommunikationspartner auf der Liste sendet in der ersten Zeitscheibe sein Datenpaket über das Kommunikationsnetzwerk aus, und die weiteren Kommunikationspartner senden nach ihrer Abfolge auf der Liste jeweils in einer folgenden Zeitscheibe ihr Datenpaket über das Kommunikationsnetzwerk aus. Damit steht für jeden Kommunikationspartner fest, in welcher Zeitscheibe er selbst sein Datenpaket aussendet und von welchem Kommunikationspartner er in den anderen Zeitscheiben jeweils dessen Datenpaket empfängt. Wenn die Anzahl der aktuell über das Kommunikationsnetzwerk kommunizierenden Kommunikationspartner kleiner ist als die begrenzte Anzahl der Kommunikationspartner, können Zeitscheiben am Ende des Kommunikationszyklus ungenutzt bleiben. Grundsätzlich kann die begrenzte Anzahl der Kommunikationspartner, die in die Definition des sich fortlaufend wiederholenden Kommunikationszyklus bei dem erfindungsgemäßen Verfahren eingeht, variabel sein, um sie an die maximal zu erwartende Anzahl der aktuell über das Kommunikationsnetzwerk kommunizierenden Kommunikationspartner anzupassen, damit die Zahl der ungenutzten Zeitscheiben klein bleibt. Bei einer in etwa gleichbleibenden Zahl der zu erwartenden aktuell über das Kommunikationsnetzwerk kommunizierenden Kommunikationspartner ist eine solche Anpassbarkeit aber nicht unbedingt mit größeren Vorteilen verbunden, die den mit ihr verbundenen Aufwand rechtfertigen.

Um die einzelnen Kommunikationspartner zu synchronisieren, was beispielsweise für eine genau zeitgleiche Datenaufnahme in den einzelnen Kommunikationspartnern wichtig ist, empfangen diese von dem ersten Kommunikationspartner auf der Liste jeweils eine Delay-Mitteilung. Diese Delay-Mitteilung von dem ersten Kommunikationspartner umfasst erfindungsgemäß eine Zeitdifferenz zwischen dem Beginn der Zeitscheibe, in der der jeweilige weitere Kommunikationspartner sein Datenpaket ausgesendet hat, in dem ersten Kommunikationspartner und dem Eingang des Datenpakets von dem jeweiligen weiteren Kommunikationspartner bei dem ersten Kommunikationspartner sowie eine innere Datenlaufzeit des ersten Kommunikationspartners. Die Delay-Mitteilung kann diese beiden Werte, d. h. die Zeitdifferenz und die innere Datenlaufzeit des ersten Kommunikationspartners, als Einzelwerte umfassen oder als Delay berechnet als halbe Summe der Zeitdifferenz und der inneren Datenlaufzeit des ersten Kommunikationspartners.

Diese Inhalte der Delay-Mitteilungen sind in jedem Fall keine absoluten Zeiten, sondern Zeitdifferenzen, und es sind ausschließlich Differenzen zwischen Zeiten in dem ersten Kommunikationspartner. Die innere Datenlaufzeit des ersten Kommunikationspartners ist dabei eine Geräteeigenschaft des ersten Kommunikationspartners, die als fester Wert in dem ersten Kommunikationspartner hinterlegt sein kann, die der erste Kommunikationspartner aktuell selbst erfassen kann oder die, wenn sie sehr klein ist, auch vernachlässigt, d. h. mit null angesetzt werden kann.

Der Beginn der Zeitscheibe, in der der weitere Kommunikationspartner sein Datenpaket ausgesendet hat, in dem ersten Kommunikationspartner, d. h. nach der Zeit des ersten Kommunikationspartners, ist vor der Synchronisierung noch nicht der Beginn dieser Zeitscheibe nach der Zeit des weiteren Kommunikationspartners. Vielmehr beginnt diese Zeitscheibe in dem weiteren Kommunikationspartner um die innere Datenlaufzeit des ersten Kommunikationspartners und eine Netzwerklaufzeit verzögert, die das von dem ersten Kommunikationspartner ausgesandte Datenpaket benötigt, bis es von dem weiteren Kommunikationspartner empfangen wird und dort den Kommunikationszyklus startet. Entsprechend geht die Summe der inneren Datenlaufzeit des ersten Kommunikationspartners und die Netzwerklaufzeit in die Zeitdifferenz zwischen dem Beginn der Zeitscheibe, in der der weitere Kommunikationspartner sein Datenpaket ausgesendet hat, in dem ersten Kommunikationspartner und dem Eingang des Datenpakets von dem weiteren Kommunikationspartner bei dem ersten Kommunikationspartner ein. Ebenso geht in diese Zeitdifferenz die Netzwerklaufzeit von dem weiteren Kommunikationspartner zu dem ersten Kommunikationspartner ein. Weiterhin kann eine innere Datenlaufzeit des weiteren Kommunikationspartners eingehen, wenn er diese beim Aussenden seines Datenpakets nicht bereits kompensiert.

Aus der Zeitdifferenz, der inneren Datenlaufzeit des ersten Kommunikationspartners und ggf. der Datenlaufzeit des weiteren Kommunikationspartners können die zweimal in der Zeitdifferenz enthaltene Netzlaufzeit und das entscheidende Delay zwischen dem Beginn des Kommunikationszyklus in dem ersten Kommunikationspartner und dem Eingang des Datenpakets von dem ersten Kommunikationspartner bei dem weiteren Kommunikationspartner bestimmt werden. Diese Bestimmung kann dann, wenn der weitere Kommunikationspartner seine innere Datenlaufzeit beim Aussenden seines Datenpakets bereits kompensiert, ohne weiteres auch in dem ersten Kommunikationspartner durchgeführt werden, sonst nur in dem weiteren Kommunikationspartner, der auch seine innere Datenlaufzeit kennt.

Um das bestimmte Delay verlegt der weitere Kommunikationspartner den Beginn des Kommunikationszyklus nach seiner Zeit gegenüber dem Eingang des Datenpakets von dem ersten Kommunikationspartner vor. Dabei versteht sich, dass keine Vorverlegung in Abhängigkeit von einem noch nicht empfangenen Datenpaket des ersten Kommunikationspartners erfolgt, sondern dass der Beginn der nächsten Wiederholung des Kommunikationszyklus in dem weiteren Kommunikationspartner gegenüber dem bereits erfolgten Eingang des letzten Datenpakets von dem ersten Kommunikationspartner plus einer Dauer des Kommunikationszyklus vorverlegt wird. Die nächsten Wiederholungen des Kommunikationszyklus schließen sich dann jeweils nach der vollen Dauer des Kommunikationszyklus an. Dieser Zusammenhang kann auch so beschrieben werden, dass in dem weiteren Kommunikationspartner ein Beginn zukünftiger Wiederholungen des Kommunikationszyklus gegenüber einem ganzzahligen Vielfachen einer Dauer des Kommunikationszyklus nach dem Eingang des Datenpakets von dem ersten Kommunikationspartner bei dem weiteren Kommunikationspartner um das Delay vorverlegt wird.

Bei dem erfindungsgemäßen Verfahren wird ausgenutzt, dass der erste Kommunikationspartner weiß, in welcher Zeitscheibe der jeweilige weitere Kommunikationspartner sein Datenpaket aussendet und damit ein Maß für den Zeitpunkt des Aussendens kennt. Deshalb reicht es für die Synchronisierung der weiteren Kommunikationspartner mit dem ersten Kommunikationspartner aus, wenn der erste Kommunikationspartner neben seinen normalen Datenpaketen eine einzige Delay-Mitteilung an jeden der weiteren Kommunikationspartner macht. Ansonsten werden zwischen den Kommunikationspartnern zur Synchronisierung keine Zeiten, d. h. Zeitdifferenzen oder Laufzeiten oder gar Zeitpunkte, sondern ausschließlich die andere Kommunikationsinhalte aufweisenden Datenpakete übermittelt.

Wie schon angesprochen wurde, kann die innere Datenlaufzeit des weiteren Kommunikationspartners bereits beim Aussenden des Datenpakets durch den weiteren Kommunikationspartner kompensiert werden. Dann geht sie nicht in die Zeitdifferenz ein und muss auch nicht bei der Bestimmung des Delays berücksichtigt werden.

Eine sofortige Kompensation der inneren Datenlaufzeit des weiteren Kommunikationspartners beim Aussenden seines Datenpakets in der ihm zugeordneten Zeitscheibe hat zudem den Vorteil, dass die Aussendung des Datenpakets von dem weiteren Kommunikationspartner früher erfolgt und damit sicherer innerhalb der jeweiligen Zeitscheibe in der Zeit des ersten Kommunikationspartners bei diesem eingeht. Eine entsprechende vorgreifende Kompensation der inneren Datenlaufzeit des ersten Kommunikationspartners ist bei dem erfindungsgemäßen Verfahren hingegen nicht sinnvoll, weil dadurch der von den weiteren Kommunikationspartnern bestimmbare Beginn des Kommunikationszyklus als Synchronisierungsaufpunkt gegenüber dem tatsächlichen Beginn des Kommunikationszyklus in dem ersten Kommunikationspartner um dessen innere Datenlaufzeit verfälscht wird.

Zusätzlich kann es Teil der Synchronisierung der weiteren Kommunikationspartner auf den ersten Kommunikationspartner sein, dass die genaue Dauer des Kommunikationszyklus des ersten Kommunikationspartners anhand des zeitlichen Abstands ermittelt wird, in dem die Datenpakete von dem ersten Kommunikationspartner von den weiteren Kommunikationspartnern empfangen werden.

Die erfindungsgemäße Synchronisierung dient nicht nur einer Optimierung der Kommunikation der Kommunikationspartner über das Kommunikationsnetz, sondern ermöglicht auch eine absolut zeitgleiche Erfassung von Messwerten durch die einzelnen Kommunikationspartner. Dies ist insbesondere bei Messwerten von miteinander korrelierten Größen wichtig.

Die erfindungsgemäße Synchronisierung der weiteren Kommunikationspartner mit dem ersten Kommunikationspartner kann wiederholt werden. Zwischen solchen Wiederholungen kann die durch die Synchronisierung erreichte Synchronität der Kommunikationspartner in den weiteren Kommunikationspartnern überprüft und ggf. aktualisiert werden, indem in dem weiteren Kommunikationspartner die Zeitverzögerung des Eingangs mindestens eines zukünftigen Datenpakets von dem ersten Kommunikationspartner nach dem Beginn der entsprechenden zukünftigen Wiederholung des synchronisierten Kommunikationszyklus erfasst und eine etwaige Abweichung dieser Zeitverzögerung von dem Delay bestimmt wird. Der Beginn nachfolgender zukünftiger Wiederholungen des Kommunikationszyklus kann dann um diese Abweichung verschoben werden. Auf diese Weise kann ein Auseinandertriften der Zeiten der Kommunikationspartner kompensiert werden. Ein Driften der inneren Datenlaufzeit des ersten Kommunikationspartners oder der Netzwerklaufzeit kann auf diese Weise jedoch nicht kompensiert werden. Zudem wird die Ursache der Abweichung zwischen der erfassten Zeitverzögerung von ihrem Sollwert nicht erkannt.

Es ist daher sinnvoll, dass der weitere Kommunikationspartner die Delay-Mitteilung von dem ersten Kommunikationspartner wiederholt empfängt, beispielsweise in definierten zeitlichen Intervallen. Unbedingt sollte die Delay-Mitteilung neu empfangen werden, wenn ein neuer erster Kommunikationspartner auf der Liste erscheint oder auch wann immer ein neuer Kommunikationspartner auf der Liste erscheint. Zudem kann die Delay-Mitteilung immer dann empfangen werden, wenn es Hinweise auf eine Änderung von Datenübertragungswegen in dem Kommunikationsnetzwerk gibt. Ein solcher Hinweis kann beispielsweise durch eine signifikante sprunghafte Abweichung bei der Zeitverzögerung des Eingangs des Datenpakets von dem ersten Kommunikationspartner gegenüber dem erwarteten Zeitpunkt dieses Eingangs gegeben sein.

Bei dem erfindungsgemäßen Verfahren kann der erste Kommunikationspartner von sich aus die Delay-Mitteilungen an die weiteren Kommunikationspartner machen. Der jeweilige weitere Kommunikationspartner kann die Delay-Mitteilung von dem ersten Kommunikationspartner aber auch gezielt mit einem seiner Datenpakete anfordern. In diesem anfordernden Datenpaket kann der weitere Kommunikationspartner die Zeitscheibe angeben, in der er das anfordernde Datenpaket aussendet. Dies ist jedoch nicht zwingend, wenn der erste Kommunikationspartner diese Zuordnung auch ohne diese Angabe, beispielsweise aufgrund der ihm geführten Liste treffen kann.

Bei dem erfindungsgemäßen Verfahren können die Datenpakete von allen Kommunikationspartnern eine Geräteidentifikation des jeweiligen Kommunikationspartners umfassen, um die Datenpakete dem jeweiligen absendenden Kommunikationspartner eindeutig zuzuordnen. Die Geräteidentifikationen können auch genutzt werden, um die Liste der aktuellen Kommunikationspartner nach diesen Geräteidentifikationen zu ordnen. So wird beispielsweise die Geräteidentifikation des jeweiligen Kommunikationspartners als Zahl interpretiert, und die Liste wird nach der Größe dieser Zahlen geordnet, entweder ansteigend oder abfallend. Der dabei auf den ersten Platz der Liste gelangende Kommunikationspartner ist derjenige, auf den sich die anderen Kommunikationspartner nach dem erfindungsgemäßen Verfahren synchronisieren. Andere Funktionen als Master des Kommunikationsnetzwerks sind damit nicht verbunden. Wenn dieser erste Kommunikationspartner auf der Liste ausfällt, was dadurch registriert werden kann, dass er für eine bestimmte aufeinanderfolgende Zahl von Kommunikationszyklen keine Datenpakete mehr ausgesandt hat, rücken die weiteren Kommunikationspartner in der Liste auf, und der bisherige zweite Kommunikationspartner der Liste wird der neue erste Kommunikationspartner. Auch dann, wenn ein Kommunikationspartner hinzukommt, der aufgrund seiner Geräteidentifikation auf den ersten Platz der Liste gelangt, findet ein Wechsel in dem ersten Kommunikationspartner statt. Nach einem solchen Wechsel erfolgt die erfindungsgemäße Synchronisierung der weiteren Kommunikationspartner auf den ersten Kommunikationspartner auf Basis der Delay-Mitteilungen des ersten Kommunikationspartners an die weiteren Kommunikationspartner.

Der Ausfall des bisherigen ersten Kommunikationspartners auf der Liste hat bei dem erfindungsgemäßen Verfahren keinen Verlust der Synchronität der anderen Kommunikationspartner zur Folge, bis eine neue Synchronisierung auf den neuen ersten Kommunikationspartner erfolgt ist. Vielmehr bleibt die zuvor erreichte Synchronität auch bei Ausfall des entsprechenden ersten Kommunikationspartners über viele Kommunikationszyklen erhalten, bis sie dann im Rahmen einer neuen Synchronisierung auf den neuen ersten Kommunikationspartner ersetzt wird.

Die Liste der Kommunikationspartner kann in jedem der Kommunikationspartner zu Beginn der Kommunikation über das Kommunikationsnetzwerk aufgrund der in den Datenpaketen enthaltenen Geräteidentifikationen erstmalig erstellt und dann fortlaufend aktualisiert werden. Dabei führt selbst eine unkontrollierte Aussendung der Datenpakete zu Beginn der Kommunikation über das Kommunikationsnetzwerk nur zu einer begrenzten Anzahl von Kommunikationszyklen, in denen mehrere Kommunikationspartner versuchen, ihre Datenpakete innerhalb derselben Zeitscheibe auszusenden, weil sie dies zumindest selbst feststellen und anhand der in derselben Zeitscheibe von dem jeweils anderen Kommunikationspartner empfangenen Datenpakete erkennen, ob sie oder der jeweils andere Kommunikationspartner eigentlich in einer späteren Zeitscheibe hätten senden sollen, was dann während des nächsten Kommunikationszyklus berücksichtigt werden kann.

Die vorliegende Erfindung ist grundsätzlich unabhängig von der Architektur des Kommunikationsnetzwerks. So kann es sich um ein Sternnetz, ein Liniennetz oder ein Ringnetz handeln.

Die Inhalte der von den Kommunikationspartnern übermittelten Datenpakete können zyklische, d. h. wiederholt zu übermittelnde Daten, wie beispielsweise Betriebsparameter und Messwerte, und asynchrone, d. h. singulär auftretende Daten, wie beispielsweise Anfragen oder Fehlermeldungen, umfassen. Dabei kann ein Flag gesetzt werden, um darauf hinzuweisen, dass ein Datenpaket neben zyklischen Daten auch asynchrone Daten enthält. Die erfindungsgemäßen Delay-Mitteilungen von dem ersten Kommunikationspartner und die Anfragen nach diesen Delay-Mitteilungen sind typische asynchrone Daten.

Die erfindungsgemäß kommunizierenden Kommunikationspartner können parallel oder zu anderen Zeiten grundsätzlich auch noch auf andere Weise miteinander kommunizieren, d. h. beispielsweise von Punkt zu Punkt.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Schritte des erfindungsgemäßen Verfahrens können durch weitere Schritte ergänzt werden oder die einzigen Merkmale sein, die das jeweilige Verfahren aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: illustriert mehrere an ein als Ringnetz ausgebildetes Kommunikationsnetzwerk angeschlossene Kommunikationspartner.
- **Fig. 2**: illustriert einen Kommunikationszyklus der Kommunikation der Kommunikationspartner über das Kommunikationsnetzwerk gemäß Fig. 1.
- **Fig. 3**: erläutert eine bei der Kommunikation über das Kommunikationsnetzwerk gemäß Fig. 1 anfänglich auftretende Zeitdifferenz.
- **Fig. 4**: illustriert eine erfolgreiche erfindungsgemäße Synchronisierung eines weiteren Kommunikationspartners mit einem ersten Kommunikationspartner und die Folgen eines Auseinandertriftens der Zeiten der Kommunikationspartner.
- **Fig. 5**: ist ein Flussdiagramm zu einer Ausführungsform des erfindungsgemäßen Verfahrens zur Datenkommunikation zwischen an ein gemeinsames Kommunikationsnetzwerk angeschlossenen Kommunikationspartnern.

### FIGURENBESCHREIBUNG

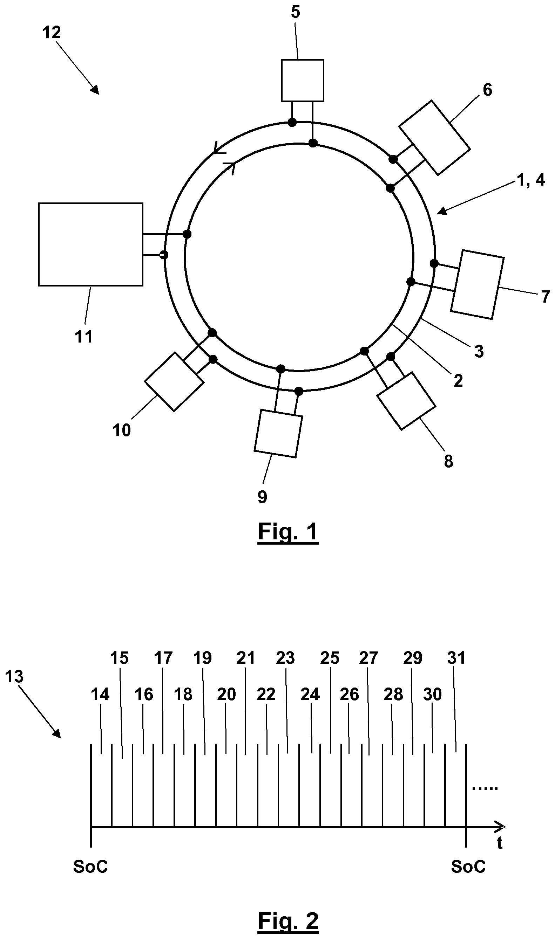

**Fig. 1** illustriert ein Ringnetz 1 mit zwei antiparallelen Datenübertragungswegen 2 und 3 als Beispiel für ein Kommunikationsnetzwerk 4. An das Kommunikationsnetzwerk 4 sind verschiedene Kommunikationspartner 5 bis 11 angeschlossen. Die Kommunikationspartner 5 bis 11 sind dabei Teile einer zusammenhängenden Anlage 12, beispielsweise einer Anlage zur unterbrechungsfreien Stromversorgung hier nicht dargestellter Lasten auch bei Ausfall eines hier nicht dargestellten übergeordneten Energieversorgungsnetzes. Konkret können einzelne der Kommunikationspartner 5 bis 10 Sensoren zur Messwertaufnahme an verschiedenen Stellen der Anlage 12 sein, während der Kommunikationspartner 11 beispielsweise eine Zentraleinheit ist, die die Messwerte von den anderen Kommunikationspartnern erfasst und auswertet sowie auf dieser Basis die Anlage 12 steuert.

Die Kommunikation der Kommunikationspartner 5 bis 11 über das Kommunikationsnetzwerk 4 erfolgt nach einem Kommunikationszyklus 13 der fortlaufend wiederholt wird. Der zeitliche Ablauf des Kommunikationszyklus 13 ist in **Fig. 2** illustriert. Der Kommunikationszyklus 13 beginnt mit einem Zyklusstart SoC, wobei das Kürzel SoC auf die englische Angabe Start of Cycle zurückgeht. Der Kommunikationszyklus 13 endet am folgenden SoC, d. h. dem Beginn der nachfolgenden Wiederholung des Kommunikationszyklus 13. Der Kommunikationszyklus 13 ist in gleichlange Zeitscheiben 14 bis 31 unterteilt. Grundsätzlich könnten die Zeitscheiben jedoch auch unterschiedliche Längen aufweisen. Während jeder der Zeitscheiben 14 bis 31 sendet nur einer der Kommunikationspartner 5 bis 11 gemäß Fig. 1 Daten über das Kommunikationsnetzwerk 4. Entsprechend werden während dieser Zeitscheibe auch nur von diesem einen Kommunikationspartner Daten über das Kommunikationsnetzwerk 4 von den anderen Kommunikationspartnern empfangen. Die Zuordnung der einzelnen Kommunikationspartner 5 bis 11 zu den Kommunikationsscheiben 14 bis 31 erfolgt nach einer Liste der Kommunikationspartner 5 bis 11, die in allen Kommunikationspartnern 5 bis 11 geführt und dabei in einer selben Weise geordnet ist. Beispielsweise wird diese Liste nach absteigenden MAC-Adressen der Kommunikationspartner 5 bis 11 geführt. Das heißt der Kommunikationspartner 5 bis 11 mit der größten MAC-Adresse sendet seine Daten in der ersten Zeitscheibe 14 aus, der Kommunikationspartner mit der zweitgrößten MAC-Adresse in der Zeitscheibe 15 und so weiter. Zu Beginn der Kommunikation über das Kommunikationsnetzwerk 4 können die Kommunikationspartner 5 bis 11, in denen jeweils die Struktur des Kommunikationszyklus 13 gemäß Fig. 2 abgelegt ist, ihre Kommunikation unkoordiniert beginnen. Wenn sie dabei in ihren jeweiligen Datenpaketen, die über das Kommunikationsnetzwerk 4 ausgesandt werden, ihre MAC-Adressen angeben, können diese von den anderen Kommunikationspartnern 5 bis 11 registriert werden, um die Liste der Kommunikationspartner 5 bis 11 aufzubauen. Sobald diese Liste in allen Kommunikationspartnern 5 bis 11 erstellt ist, steht fest, wer der erste Kommunikationspartner auf der Liste ist und deshalb seine Datenpaket in der jeweils ersten Zeitscheibe 14 über das Kommunikationsnetzwerk 4 aussenden darf und damit den SoC der jeweiligen Wiederholung des Kommunikationszyklus 13 vorgibt. Wenn zwei Kommunikationspartner 5 bis 11 denselben Platz auf der Liste beanspruchen, senden sie in derselben Zeitscheibe 14 bis 31 ihr Datenpaket aus, das dann jeweils von dem anderen Kommunikationspartner empfangen wird, so dass ein Abgleich erfolgen kann, welcher der beiden Kommunikationspartner den Listenplatz zu Recht für sich beansprucht bzw. welcher der beiden Kommunikationspartner seine Liste korrigieren muss. Auf diese Weise können auch neue Kommunikationspartner 5 bis 11 dem Kommunikationsnetzwerk 4 im laufenden Betrieb hinzugefügt werden. Genauso können Kommunikationspartner 5 bis 11 im laufenden Betrieb entfernt werden. Die anderen Kommunikationspartner 5 bis 11 stellen dann fest, dass der entfernte Kommunikationspartner innerhalb seiner Zeitscheibe wiederholt keine Datenpakete aussendet, so dass diese Zeitscheibe durch Aufrücken der in der Liste dahinterstehenden Kommunikationspartner neu besetzt werden kann.

Maximal können so viele Kommunikationspartner 5 bis 11 über das Kommunikationsnetzwerk 4 kommunizieren, wie Zeitscheiben 14 bis 31 vorhanden sind. Wenn weniger Kommunikationspartner kommunizieren, bleiben weiter hinten in dem Kommunikationszyklus 13 liegende Zeitscheiben unbesetzt. Grundsätzlich kann ein oder können mehrere der Kommunikationspartner auch mehr als eine Zeitscheibe in jedem Kommunikationszyklus beanspruchen. Wenn mehr Kommunikationspartner als Zeitscheiben verfügbar sind, die über das Kommunikationsnetzwerk 4 kommunizieren sollen, muss ein Kommunikationszyklus 13 mit mehr Zeitscheiben 14 bis 31 definiert werden.

Sobald feststeht, wer der erste Kommunikationspartner auf den von allen Kommunikationspartnern geführten, übereinstimmenden Listen ist, erfolgt die Synchronisierung der weiteren Kommunikationspartner mit diesem ersten Kommunikationspartner. Dazu wird in einem ersten Schritt die genaue Dauer T_{Zykl} des Kommunikationszyklus 13 in dem ersten Kommunikationspartner von den weiteren Kommunikationspartnern erfasst, indem sie den Abstand messen, in dem die Datenpakete von dem ersten Kommunikationspartner bei ihnen eingehen. Abhängig davon senden dann die weiteren Kommunikationspartner ihre Datenpakete in der ihrer Stellung in der Liste entsprechenden Zeitscheibe über das Kommunikationsnetzwerk aus. Dabei können die weiteren Kommunikationspartner ihre eigenen inneren Datenlaufzeiten, die sie zuvor gemessen haben oder die ihnen aus anderem Grund bekannt ist, weil sie in ihnen z. B. als im Wesentlichen konstante Geräteparameter hinterlegt sind, kompensieren, so dass sie ihre Datenpakete gleich zu Beginn der jeweiligen Zeitscheibe und nicht erst um ihre innere Datenlaufzeit verzögert in das Kommunikationsnetzwerk ausgeben. Dieser Beginn der jeweiligen Zeitscheibe hängt dabei noch unmittelbar von dem Eingang des letzten Datenpakets von dem ersten Kommunikationspartner in dem weiteren Kommunikationspartner als SOC_{I}' ab. Den absoluten Zeitpunkt des SoC_{I} in dem ersten Kommunikationsteilnehmer können die weiteren Kommunikationsteilnehmer nur aus einer für jeden der weiteren Kommunikationsteilnehmer individuellen Delay-Mitteilung des ersten Kommunikationsteilnehmers in Erfahrung bringen, um sich darauf synchronisieren zu können.

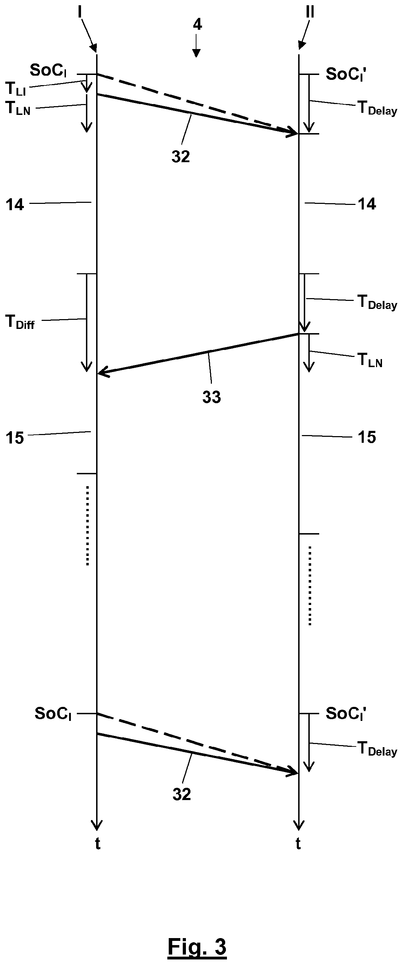

**Fig. 3** zeigt links den Zeitverlauf in dem ersten Kommunikationspartner I und rechts den Zeitverlauf in dem zweiten Kommunikationspartner II der Liste. Der erste Kommunikationspartner I sendet sein Datenpaket 32 gegenüber seinem SoC_{I} um seine innere Datenlaufzeit T_{LI} verzögert über das Kommunikationsnetzwerk 4 aus. An dem zweiten Kommunikationspartner II trifft das Datenpaket 32 zusätzlich um eine Datenlaufzeit T_{LN} des Kommunikationsnetzwerks 4 zwischen den beiden Kommunikationspartnern I und II verzögert zu dem Zeitpunkt SOC_{I}' ein, so dass sich insgesamt ein Delay T_{Delay} ergibt. Um dieses Delay T_{Delay} gegenüber ihrem Beginn in dem ersten Kommunikationspartner I verzögert beginnen die Zeitscheiben 14, 15 ff. in dem zweiten Kommunikationspartner II. Entsprechend sendet der zweite Kommunikationspartner II sein Datenpaket erst um dieses Delay T_{Delay} gegenüber dem Beginn der Zeitscheibe 15 in dem ersten Kommunikationspartner I verzögert über das Kommunikationsnetzwerk aus. Die innere Datenlaufzeit des zweiten Kommunikationspartners II ist hierbei schon kompensiert. Eine Zeitdifferenz T_{Diff} zwischen dem Beginn der zweiten Zeitscheibe 15 in dem ersten Kommunikationspartner I und dem Eingang des Datenpakets von dem zweiten Kommunikationspartner II setzt sich demnach gemäß T_{Diff} = T_{Delay} + T_{LN} aus dem Delay T_{Delay} und der Datenlaufzeit T_{LN} des Kommunikationsnetzwerks 4 zwischen dem zweiten Kommunikationspartner II und dem ersten Kommunikationspartner I zusammen. Wegen der Zusammensetzung des Delays T_{Delay} gilt daher, dass die Zeitdifferenz T_{Diff} gleich zweimal der Datenlaufzeit T_{LN} zwischen den Kommunikationspartnern I und II über das Kommunikationsnetzwerk plus einmal die innere Datenlaufzeit T_{LI} des ersten Kommunikationspartners I ist: T_{Diff} = 2 T_{LN} + T_{LI}. So lässt sich aus der in dem ersten Kommunikationspartner I gemessenen Zeitdifferenz T_{Diff} das Delay T_{Delay} berechnen, indem zu der Zeitdifferenz T_{Diff} die innere Datenlaufzeit T_{LI} hinzuaddiert und das Ergebnis halbiert wird: T_{Delay} = (T_{Diff} + T_{LI}) / 2. Die innere Datenlaufzeit T_{LI} des ersten Kommunikationspartners I kann in dem ersten Kommunikationspartners I gemessen werden, oder sie kann dem ersten Kommunikationspartner I aus anderem Grund bekannt, weil sie in ihm z. B. als im Wesentlichen konstante Geräteparameter hinterlegt ist. In den voranstehenden Ausführungen ist unterstellt, dass die Datenlaufzeit T_{LN} des Kommunikationsnetzwerks 4 zwischen dem ersten Kommunikationspartner I und dem zweiten Kommunikationspartner II zumindest im Wesentlichen gleich der Datenlaufzeit T_{LN} des Kommunikationsnetzwerks 4 zwischen dem zweiten Kommunikationspartner I und dem ersten Kommunikationspartner I ist, d. h., dass die Datenlaufzeit des Kommunikationsnetzes 4 keine relevante Richtungsabhängigkeit aufweist. In jedem Fall ist die Datenlaufzeit T_{LN} des Kommunikationsnetzwerks 4 von und zu dem ersten Kommunikationspartner aber ein von dem jeweiligen weiteren Kommunikationspartner abhängiger Wert.

Der erste Kommunikationspartner I kann das derart berechnete Delay T_{Delay} mit seinem nächsten Datenpaket 32 über das Kommunikationsnetzwerk an den zweiten Kommunikationspartner II übermitteln, oder er übermittelt die Berechnungsgrundlagen, d. h. die Zeitdifferenz T_{Diff} und seine innere Datenlaufzeit T_{LI}, so dass der zweite Kommunikationspartner II selbst das Delay T_{Delay} bestimmen kann. In dem zweiten Kommunikationspartner II wird dann ein synchronisierter SoC_{S} zukünftiger Wiederholungen des Kommunikationszyklus gegenüber dem Eingang SOC_{I}' des Datenpakets 32 von dem ersten Kommunikationspartner I plus einem ganzzahligen Vielfachen n x T_{Zykl} der Dauer T_{Zykl} des Kommunikationszyklus vorverlegt gemäß: SoC_{S} = SOC_{I}' + n x T_{Zykl} - T_{Delay}. Dabei wird n mit jeder Wiederholung um 1 erhöht. Bei einem genauen Wert der Dauer T_{Zykl} des Kommunikationszyklus bleibt die damit erzielte Synchronisierung auch bei sehr großen Werten von n erhalten. Damit bleiben alle weiteren Kommunikationspartner auch untereinander synchronisiert, selbst wenn der erste Kommunikationspartner I ausfällt und keine Datenpakete 32 mehr aussendet.

Alternativ könnte zwar als Aufpunkt SOC_{I}' immer der Eingang des letzten Datenpakets 32 von dem ersten Kommunikationspartner I verwendet und n=1 konstant gehalten werden. Dieses Vorgehen funktioniert jedoch nur, wenn in jeder Wiederholung des Kommunikationszyklus ein Datenpaket 32 von dem ersten Kommunikationspartner I empfangen wird, und ist damit gegenüber einem Ausfall des ersten Kommunikationspartners I nicht robust.

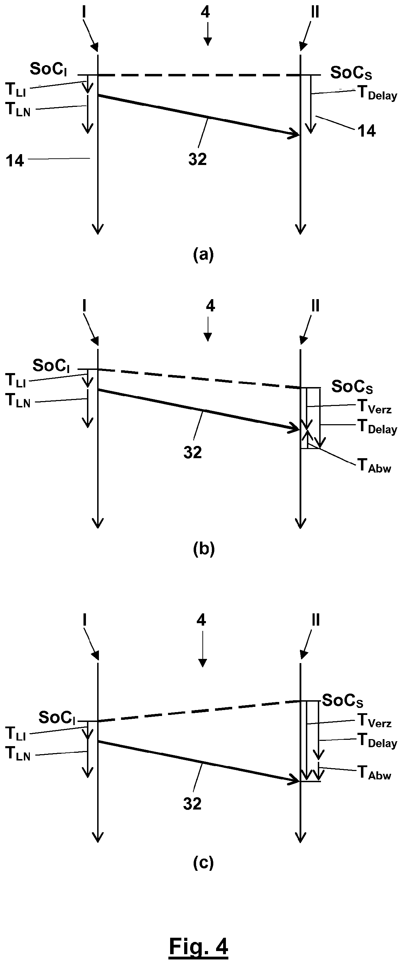

Wenn die Synchronisierung durchgeführt ist, trifft das nächste Datenpaket 32 von dem ersten Kommunikationspartner I mit einer Zeitverzögerung T_{Verz} nach dem synchronisierten SoCs in dem zweiten Kommunikationspartner II ein, die gleich dem Delay T_{Delay} ist, wie dies in Fig. 4 (a) illustriert ist. Das Feststellen dieser Zeitverzögerung T_{Verz} = T_{Delay} zwischen dem synchronisierten SoCs und dem Eingang des Datenpakets 32 von dem ersten Kommunikationspartner I ist daher eine Bestätigung einer korrekten Synchronisierung. Wenn jedoch wie in **Fig. 4 (b)** illustriert ist, nicht die erwartete Zeitverzögerung T_{Verz} = T_{Delay} zwischen dem synchronisierten SoCs in dem zweiten Kommunikationspartner II für den Eingang eines Datenpakets 32 von dem ersten Kommunikationspartner I registriert wird, sondern eine um eine Abweichung T_{Abw} von dem Delay T_{Delay} abweichende Zeitverzögerung T_{Verz}, weist dies auf einen Offset des SoCs in dem zweiten Kommunikationspartner II gegenüber dem SoC_{I} in dem ersten Kommunikationspartner I von der Größe diese Abweichung T_{Abw} hin, die zu korrigieren ist. Die **Fig. 4 (b) und (c)** illustrieren zwei unterschiedliche Relativverschiebungen des synchronisierten SoCs des zweiten Kommunikationspartners II gegenüber dem SoC_{I} des ersten Kommunikationspartners I. Eine Kompensation der Abweichung T_{Abw} durch Verschiebung des synchronisierten SoCs in derselben Richtung ist aber nur sinnvoll, wenn die Abweichung T_{Abw} auf eine relative Drift zwischen den Uhren der Kommunikationspartner I und II beruht und nicht auf einer Änderung der inneren Datenlaufzeit T_{LI} des zweiten Kommunikationspartners II oder der Datenlaufzeit T_{LN} des Kommunikationsnetzwerks zwischen den Kommunikationspartnern I und II.

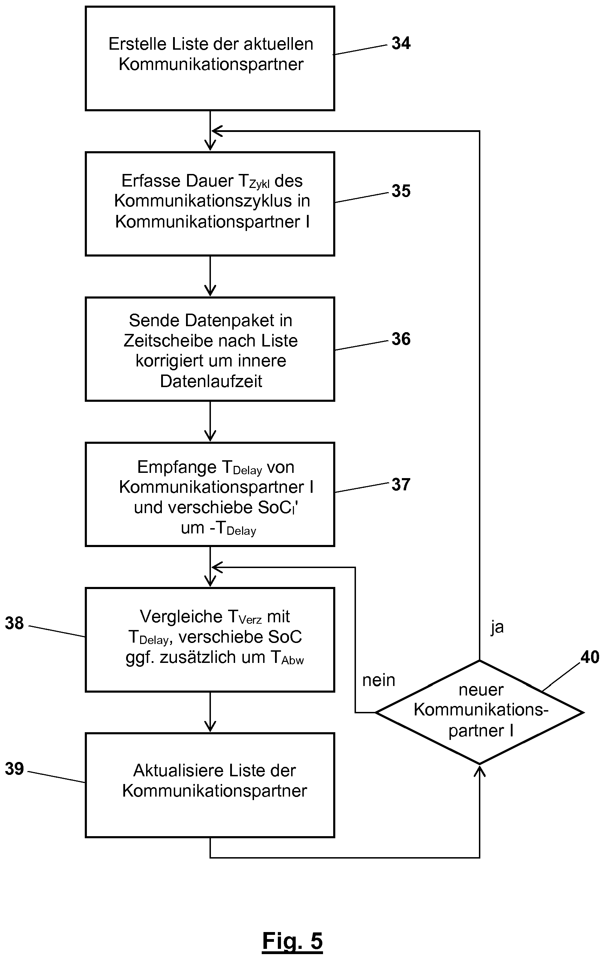

**Fig. 5** illustriert den Ablauf des erfindungsgemäßen Verfahrens in einem der weiteren Kommunikationspartner, die hinter dem ersten Kommunikationspartner I auf der Liste stehen. In einem ersten Schritt 34 wird eine Liste der aktuellen Kommunikationspartner erstellt. Zu diesem Zeitpunkt steht noch nicht fest, ob nicht der betrachtete Kommunikationspartner der erste Kommunikationspartner I ist. Dies sei nicht der Fall.

In einem zweiten Schritt 35 erfasst der weitere Kommunikationspartner die genaue Dauer T_{Zykl} des Kommunikationszyklus in dem ersten Kommunikationspartner I, indem er den Abstand misst, in dem die Datenpakete 32 von dem ersten Kommunikationspartner I von ihm empfangen werden.

In dem nächsten Schritt 36 sendet dann der betrachtete Kommunikationspartner sein Datenpaket 33 in der seiner Position auf der Liste entsprechenden Zeitscheibe des Kommunikationszyklus über das Kommunikationsnetz. Als Antwort auf irgendein solches Datenpaket von dem betrachteten Kommunikationspartner oder nur als Antwort auf ein Datenpaket, in dem eine besondere Anforderung einer Delay-Mitteilung von dem ersten Kommunikationspartner enthalten ist, empfängt der betrachtete Kommunikationspartner in einem Schritt 37 das Delay T_{Delay} = (T_{Dif} + T_{LI}) / 2 von dem ersten Kommunikationspartner I oder die zur Berechnung des Delays T_{Delay} notwendigen Werte der Zeitdifferenz T_{Diff} und der inneren Datenlaufzeit T_{LI}. Um das Delay T_{Delay} verschiebt der betrachtete Kommunikationspartner seinen synchronisierten Beginn SoCs zukünftiger Kommunikationszyklen gegenüber dem Eingang SOC_{I}' des Datenpakets 32 von dem ersten Kommunikationspartner I plus einem ganzzahligen Vielfachen n der Dauer T_{Zykl} des Kommunikationszyklus in dem ersten Kommunikationspartner I in der Zeit nach hinten. Damit beginnt der synchronisierte Kommunikationszyklus in dem betrachteten Kommunikationspartner zeitgleich mit dem Kommunikationszyklus in dem ersten Kommunikationspartner I.

Dies wird in einem Schritt 38 durch Vergleich der Zeitverzögerung T_{Verz}, mit der die Datenpakete 32 von dem ersten Kommunikationspartner I in dem betrachteten Kommunikationspartner eintreffen, mit dem Delay T_{Delay} kontrolliert. Falls zwischen der Zeitverzögerung T_{Verz} und dem Delay T_{Delay} eine Abweichung T_{Abw} festgestellt wird, wird der Beginn SoC_{S} des synchronisierten Kommunikationszyklus in dem betrachteten Kommunikationspartner zusätzlich um T_{Abw} verschoben. Auf diese Weise lässt sich beispielsweise eine Drift einer inneren Uhr des betrachteten Kommunikationspartners gegenüber der inneren Uhr des ersten Kommunikationspartners I kompensieren. Ob aber geänderte Datenlaufzeiten T_{LI} oder T_{LN} die Ursachen für die Abweichung T_{Abw} sind, welche sich auf diese Weise nicht kompensieren lassen, ist so nicht ohne weiteres erkennbar. Allerdings sind vom Vorzeichen alternierende Abweichungen T_{Abw} ein Hinweis auf geänderte Datenlaufzeiten T_{LI} oder T_{LN}. Dann bedarf es einer neuerlichen Delay-Mitteilung von dem ersten Kommunikationspartner I.

In einem sich wiederholenden Schritt 39 wird in dem betrachteten Kommunikationspartner die Liste der Kommunikationspartner aktualisiert. Wenn auf der Liste ein neuer erster Kommunikationspartner I auftaucht, wird die Synchronisierung neu durchgeführt. Ansonsten wird die Synchronisierung beginnend mit Schritt 35 in gewissen zeitlichen Abständen neu durchgeführt oder dann, wenn ein hoher Wert von oder eine alternierendes Vorzeichen bei T_{Abw} auftritt.

### BEZUGSZEICHENLISTE

- 1: Ringnetz
- 2-3: Datenübertragungsweg
- 4: Kommunikationsnetzwerk
- 5-11: Kommunikationspartner
- 12: Anlage
- 13: Kommunikationszyklus
- 14-31: Zeitscheibe
- 32-33: Datenpaket
- 34-40: Schritt
- I: erster Kommunikationspartner
- II: zweiter Kommunikationspartner
- T_{LI}: Innere Datenlaufzeit des ersten Kommunikationspartners
- T_{LN}: Datenlaufzeit des Kommunikationsnetzwerks
- T_{Diff}: Zeitdifferenz
- T_{Delay}: Delay
- Tverz: Zeitverzögerung
- T_{Abw}: Abweichung
- SoC: Beginn des Kommunikationszyklus
- SoC_{I}: Beginn des Kommunikationszyklus im ersten Kommunikationspartner
- SOC_{I}': Eingang des Datenpakets von dem ersten Kommunikationspartner bei dem zweiten Kommunikationspartner
- SoC_{S}: Beginn des synchronisierten Kommunikationszyklus in dem zweiten Kommunikationspartner
- T_{Zykl}: Dauer des Kommunikationszyklus

## Patentansprüche

1. Verfahren zur Datenkommunikation zwischen Kommunikationspartnern (5 bis 11), die in einer begrenzten Anzahl an ein gemeinsames Kommunikationsnetzwerk (4) angeschlossen sind,
- wobei ein sich fortlaufend wiederholender Kommunikationszyklus (13) mit einer festen Abfolge von Zeitscheiben (14 bis 31), deren Anzahl mindestens so groß ist wie die begrenzte Anzahl der Kommunikationspartner (5 bis 11), für alle Kommunikationspartner (5 bis 11) definiert wird,
- wobei in jedem Kommunikationspartner (5 bis 11) eine Liste der aktuell über das Kommunikationsnetzwerk (4) kommunizierenden Kommunikationspartner (5 bis 11) geführt wird, die in allen Kommunikationspartnern (5 bis 11) auf eine selbe Weise geordnet ist,
- wobei bei jeder Wiederholung des Kommunikationszyklus (13) der erste Kommunikationspartner (I) auf der Liste in der ersten Zeitscheibe (14) ein Datenpaket (32) über das Kommunikationsnetzwerk (4) aussendet und die weiteren Kommunikationspartner (II) nach ihrer Abfolge auf der Liste jeweils in einer folgenden Zeitscheibe (15 bis 31) ein Datenpaket (33) über das Kommunikationsnetzwerk (4) aussenden und
- wobei mindestens einer der weiteren Kommunikationspartner (II) von dem ersten Kommunikationspartner (I) auf der Liste eine Delay-Mitteilung empfängt,
**dadurch gekennzeichnet,**
- **dass** die Delay-Mitteilung von dem ersten Kommunikationspartner (I) eine Zeitdifferenz (T_{Diff}) zwischen dem Beginn der Zeitscheibe (15 bis 31), in der der mindestens eine weitere Kommunikationspartner (II) sein Datenpaket (33) ausgesendet hat, in dem ersten Kommunikationspartner (I) und dem Eingang des Datenpakets (33) von dem mindestens einen weiteren Kommunikationspartner (II) bei dem ersten Kommunikationspartner (I) sowie eine innere Datenlaufzeit (T_{LI}) des ersten Kommunikationspartners (I) umfasst.

2. Verfahren nach Anspruch 1, **dadurch gekennzeichnet, dass** die Delay-Mitteilung von dem ersten Kommunikationspartner (I) die Zeitdifferenz (T_{Diff}) und die innere Datenlaufzeit (T_{LI}) des ersten Kommunikationspartners (I) jeweils als getrennte Werte oder in Form eines Delays (T_{Delay}) umfasst, das gleich einer halben Summe der Zeitdifferenz (T_{Diff}) und der inneren Datenlaufzeit (T_{LI}) des ersten Kommunikationspartners (I) ist.

3. Verfahren nach Anspruch 2, **dadurch gekennzeichnet, dass** in dem mindestens einen weiteren Kommunikationspartner (II) ein Beginn (SoCₙ) zukünftiger Wiederholungen des Kommunikationszyklus (13) gegenüber einem ganzzahligen Vielfachen (n) einer Dauer (T_{Zykl}) des Kommunikationszyklus (13) nach dem Eingang des Datenpakets (32) von dem ersten Kommunikationspartner (I) bei dem mindestens einen weiteren Kommunikationspartner (II) gemäß SoC_{S} = SOC_{I}' + n x T_{Zykl} - T_{Delay} um das Delay (T_{Delay}) in der Zeit nach hinten verlegt wird.

4. Verfahren nach Anspruch 3, **dadurch gekennzeichnet, dass** der Beginn (SoCₙ) zukünftiger Wiederholungen des Kommunikationszyklus (13) um eine Hälfte einer inneren Datenlaufzeit des mindestens einen weiteren Kommunikationspartners (II) in der Zeit nach vorne verlegt wird, soweit diese innere Datenlaufzeit des mindestens einen weiteren Kommunikationspartners (II) in die Zeitdifferenz (T_{Diff}) eingeht.

5. Verfahren nach Anspruch 3 oder 4, **dadurch gekennzeichnet, dass** bei mindestens einer Wiederholung des Kommunikationszyklus (13) in dem mindestens einen weiteren Kommunikationspartner (II)
- eine Zeitverzögerung (T_{Verz}) des Eingangs eines Datenpakets (32) von dem ersten Kommunikationspartner (I) nach dem Beginn (SoCₙ) der mindestens einen Wiederholung des Kommunikationszyklus (13) in dem mindestens einen weiteren Kommunikationspartner (II) erfasst wird,
- eine Abweichung (T_{Abw}) dieser Zeitverzögerung (T_{Verz}) von dem Delay (T_{Delay}), ggf. minus der Hälfte der inneren Datenlaufzeit des mindestens einen weiteren Kommunikationspartners, ermittelt wird und
- der Beginn nachfolgender zukünftiger Wiederholungen des Kommunikationszyklus (13) in dem mindestens einen weiteren Kommunikationspartner (II) um die Abweichung (T_{Abw}) verschoben wird.

6. Verfahren nach einem der Ansprüche 3 bis 5, **dadurch gekennzeichnet, dass** der mindestens eine weitere Kommunikationspartner (II) die Dauer (T_{Zykl}) des Kommunikationszyklus (13) aus dem zeitlichen Abstand bestimmt, in dem die Datenpakte (32) von dem ersten Kommunikationspartner (I) bei ihm eingehen.

7. Verfahren nach einem der Ansprüche 1 bis 6, **dadurch gekennzeichnet, dass** der mindestens eine weitere Kommunikationspartner (II) die Delay-Mitteilung empfängt
- in definierten zeitlichen Intervallen und/oder
- wann immer ein neuer erster Kommunikationspartner (I) auf der Liste erscheint und/oder
- wann immer ein neuer Kommunikationspartner (5 bis 11) auf der Liste erscheint und/oder
- wann immer Hinweise auf eine Änderung von Datenübertragungswegen in dem Kommunikationsnetzwerk (4) auftreten.

8. Verfahren nach einem der Ansprüche 1 bis 7, **dadurch gekennzeichnet, dass** der mindestens eine weitere Kommunikationspartner (II) die Delay-Mitteilung von dem ersten Kommunikationspartner (I) mit einem seiner Datenpakete (33) anfordert.

9. Verfahren nach Anspruch 8, **dadurch gekennzeichnet, dass** der mindestens eine weitere Kommunikationspartner (II) beim Anfordern der Delay-Mitteilung die Zeitscheibe (15 bis 31) angibt, in der er das anfordernde Datenpaket (33) aussendet.

10. Verfahren nach einem der Ansprüche 1 bis 9, **dadurch gekennzeichnet, dass** die Datenpakete (32, 33) von allen Kommunikationspartnern (5 bis 11) eine Geräteidentifikation des jeweiligen Kommunikationspartners (5 bis 11) umfassen und dass die Liste nach den Geräteidentifikationen der Kommunikationspartnern (5 bis 11) geordnet wird.

11. Verfahren nach Anspruch 10, **dadurch gekennzeichnet, dass** die Liste der Kommunikationspartner (5 bis 11) in jedem der Kommunikationspartner fortlaufend auf Basis der in den Datenpaketen (32, 33) enthaltenen Geräteidentifikationen aktualisiert wird.

## Claims

1. Method of data communication between communication partners (5 to 11) which, in a limited number, are connected to a common communication network (4),
- wherein a continuously repeated communication cycle (13) comprising a fixed sequence of time slices (14 to 31), whose number is at least as high as the limited number of the communication partners (5 to 11), is defined for all communication partners (5 to 11),
- wherein a list of the communication partners (5 to 11) presently communicating via the communication network (4) is kept in each of the communication partners (5 to 11), the list being arranged in a same way in all of the communication partners (5 to 11),
- wherein, in each repetition of the communication cycle (13), the first communication partner (I) on the list transmits a data package (32) via the communication network (4) in the first time slice (14), and the further communication partners (II) each transmit a data package (33) via the communication network (4) in a following time slice (15 to 31) according to their succession on the list, and
- wherein at least one of the further communication partners (II) receives a delay message from the first communication partner (I) on the list,
**characterised in**
- **that** the delay message from the first communication partner (I) includes a difference in time (T_{Diff}) between the beginning of the time slice (15 to 31), in which the at least one further communication partner (II) has transmitted its data package (33), in the first communication partner (I) and the incoming of the data package (33) from the at least one further communication partner (II) at the first communication partner (I) as well as an internal data run-time (T_{LI}) of the first communication partner (I).

2. Method of claim 1, **characterised in that** the delay message from the first communication partner (I) includes the difference in time (T_{Diff}) and the internal data run-time (T_{LI}) of the first communication partner (I) as separate values or as a delay (T_{Delay}) which is equal to half a sum of the difference in time (T_{Diff}) and the internal data run-time (T_{LI}) of the first communication partner (I).

3. Method of claim 2, **characterised in that**, in the at least one further communication partner (II), a beginning (SoCₙ) of future repetitions of the communication cycle (13) with regard to an integer multiple (n) of a duration (T_{Zykl}) of the communication cycle (13) after the incoming of the data package (32) from the first communication partner (I) is delayed in time by the delay (T_{Delay}) in the at least one further communication partner (II) according to SoC_{S} = SOC_{I}' + n x T_{Zykl} - T_{Delay}.

4. Method of claim 3, **characterised in that** the beginning (SoCₙ) of future repetitions of the communication cycle (13) is put forward in time by half an internal data run-time of the at least one further communication partner (II) in so far as this internal data run-time of the at least one further communication partner (II) has an effect on the difference in time (T_{Diff}).

5. Method of claim 3 or 4, **characterised in that**, in at least one repetition of the communication cycle (13), in the at least one further communication partner (II)
- a time lag (T_{Verz}) of the incoming of a data package (32) from the first communication partner (I) after the beginning (SoCₙ) of the at least one repetition of the communication cycle (13) in the at least one further communication partner (II) is determined,
- a deviation (T_{Abw}) of this time lag (T_{Verz}) from the delay (T_{Delay}), if applicable minus half the internal data run-time of the at least one further communication partner, is determined and
- the beginning of succeeding future repetitions of the communication cycle (13) in the at least one further communication partner (II) is shifted by the deviation (T_{Abw}).

6. Method of any of the claims 3 to 5, **characterised in that** the at least one further communication partner (II) determines the duration (T_{Zykl}) of the communication cycle (13) from the time intervals at which the data packages (32) from the first communication partner (I) are incoming at the least one further communication partner (II).

7. Method of any of the claims 1 to 6 **characterised in that** the at least one further communication partner (II) receives the delay message
- at defined time intervals and/or
- whenever a new first communication partner (I) appears on the list and/or
- whenever a new communication partner (5 to 11) appears on the list and/or
- whenever evidence of a change of data transmission ways in the communication network (4) arises.

8. Method of any of the claims 1 to 7, **characterised in that** the at least one further communication partner (II) requests the delay message from the first communication partner (I) by means of one of its data packages (33).

9. Method of claim 8, **characterised in that** the at least one further communication partner (II), in requesting the delay message, indicates the time slice (15 to 31) in which it transmits the requesting data package (33).

10. Method of any of the claims 1 to 9, **characterised in that** the data packages (32, 33) from all communication partners (5 to 11) include a device identification of the respective communication partner (5 to 11), and that the list is arranged according to the device identifications of the communication partners (5 to 11).

11. Method of claim 10, **characterised in that** the list of the communication partners (5 to 11) is continuously updated in each of the communication partners on basis of the device identifications included in the data packages (32, 33).

## Revendications

1. Procédé de communication de données entre des partenaires de communication (5 à 11) qui sont raccordés en nombre limité à un réseau de communication (4) commun,
- un cycle de communication (13), se répétant continuellement avec une succession fixe de tranches de temps (14 à 31) dont le nombre est au moins aussi grand que le nombre limité de partenaires de communication (5 à 11), étant défini pour tous les partenaires de communication (5 à 11),
- une liste des partenaires de communication (5 à 11) communiquant actuellement via le réseau de communication (4) étant tenue dans chaque partenaire de communication (5 à 11) et étant organisée de la même façon dans tous les partenaires de communication (5 à 11),
- lors de chaque répétition du cycle de communication (13), le premier partenaire de communication (I) de la liste envoyant dans la première tranche de temps (14) un paquet de données (32) via le réseau de communication (4), et les autres partenaires de communication (II) envoyant, suivant leur ordre de succession sur la liste, respectivement dans une tranche de temps (15 à 31) suivante, un paquet de données (33) via le réseau de communication (4), et
- au moins un des autres partenaires de communication (II)recevant en provenance du premier partenaire de communication (I) de la liste une communication de delay,
**caractérisé en ce que**
- la communication de delay en provenance du premier partenaire de communication (I) comprend une différence de temps (T_{Diff}) entre le début de la tranche de temps (15 à 31) dans laquelle l'autre partenaire de communication (II) au moins au nombre de un a envoyé son paquet de données (33) dans le premier partenaire de communication (I) et l'arrivée du paquet de données (33) de l'autre partenaire de communication (II) au moins au nombre de un chez le premier partenaire de communication (I) ainsi qu'un temps de parcours de données interne (T_{LI}) du premier partenaire de communication (I).

2. Procédé selon la revendication 1, **caractérisé en ce que** la communication de delay en provenance du premier partenaire de communication (I) comprend la différence de temps (T_{Diff}) et le temps de parcours de données interne (T_{LI}) du premier partenaire de communication (I) respectivement en tant que valeurs séparées ou sous forme d'un delay (T_{Delay}) qui est égal à une demi-somme de la différence de temps (T_{Diff}) et du temps de parcours de données interne (T_{LI}) du premier partenaire de communication (I).

3. Procédé selon la revendication 2, **caractérisé en ce que,** dans l'autre partenaire de communication (II)au moins au nombre de un, un début (SoCₙ) de futures répétitions du cycle de communication (13),par rapport à un multiple entier (n) d'une durée (T_{Zykl}) du cycle de communication (13), après l'arrivée du paquet de données (32) en provenance du premier partenaire de communication (I) chez l'autre partenaire de communication (II) au moins au nombre de un, est déplacé vers l'arrière dans le temps d'une valeur correspondant au delay (T_{Delay}) selon SoC_{S} = SoC_{I}' + n x T_{Zykl} - T_{Delay}.

4. Procédé selon la revendication 3, **caractérisé en ce que** le début (SoCₙ) de futures répétitions du cycle de communication (13) est déplacé vers l'avant dans le temps d'une valeur correspondant à une moitié d'une durée de parcours de données intérieure de l'autre partenaire de communication (II) au moins au nombre de un dans la mesure où cette durée de parcours de données intérieure de l'autre partenaire de communication (II) au moins au nombre de un entre dans la différence de temps (T_{Diff}).

5. Procédé selon la revendication 3 ou 4, **caractérisé en ce que,** lors d'au moins une répétition du cycle de communication (13) dans l'autre partenaire de communication (II)au moins au nombre de un
- un retard (T_{Verz}) de l'arrivée d'un paquet de données (32) en provenance du premier partenaire de communication (I) après le début (SoCₙ) de la répétition au moins au nombre de un du cycle de communication (13) dans l'autre partenaire de communication (II) au moins au nombre de un est détecté,
- une divergence (T_{Abw}) de ce retard (T_{Verz}) par rapport au delay (T_{Delay}), éventuellement moins la moitié de la durée de parcours de données intérieure de l'autre partenaire de communication au moins au nombre de un, est déterminée, et
- le début de futures répétitions suivantes du cycle de communication (13) dans l'autre partenaire de communication (II)au moins au nombre de un est déplacé d'une valeur correspondant à la divergence (T_{Abw}).

6. Procédé selon l'une des revendications 3 à 5, **caractérisé en ce que** l'autre partenaire de communication (II) au moins au nombre de un définit la durée (T_{Zykl}) du cycle de communication (13) à partir de l'intervalle de temps pendant lequel les paquets de données (32)en provenance du premier partenaire de communication (I) arrivent chez lui.

7. Procédé selon l'une des revendications 1 à 6, **caractérisé en ce que** l'autre partenaire de communication (II)au moins au nombre de un reçoit la communication de delay
- à des intervalles de temps définis et/ou
- à chaque fois qu'un nouveau premier partenaire de communication (I) apparaît sur la liste et/ou
- à chaque fois qu'un nouveau partenaire de communication (5 à 11) apparaît sur la liste et/ou
- à chaque fois que des indications d'une modification de chemins de transmission surviennent dans le réseau de communication (4).

8. Procédé selon l'une des revendications 1 à 7, **caractérisé en ce que** l'autre partenaire de communication (II)au moins au nombre de un demande la communication de delay en provenance du premier partenaire de communication (I) avec un de ses paquets de données (33).

9. Procédé selon la revendication 8, **caractérisé en ce que,** lors de la demande de la communication de delay, l'autre partenaire de communication (II)au moins au nombre de un indique la tranche de temps (15 à 31) pendant laquelle il envoie le paquet de données (33)demandeur.

10. Procédé selon l'une des revendications 1 à 9, **caractérisé en ce que** les paquets de données (32, 33) de tous les partenaires de communication (5 à 11) comprennent une identification d'appareil du partenaire de communication (5 à 11) respectif, et **en ce que** la liste est organisée selon les identifications d'appareil des partenaires de communication (5 à 11).

11. Procédé selon la revendication 10, **caractérisé en ce que** la liste des partenaires de communication (5 à 11) dans chacun des partenaires de communication est actualisée continuellement sur la base des identifications d'appareil contenues dans les paquets de données (32, 33).
